# EUROPEAN PATENT APPLICATION

(11) **EP 4 629 405 A1**
(43) Date of publication of application: **08.10.2025**
(21) Application number: 25167393.5
(22) Date of filing: 31.03.2025
(51) Int. Cl.: H01M 50/105, H01M 50/178, H01M 50/308, H01M 50/636, H01M 50/60, H01M 10/0525

(54) **SECONDARY BATTERY AND MANUFACTURING METHOD OF SECONDARY BATTERY**

(30) Priority: 03.04.2024 KR 20240045197
(71) Applicant: SAMSUNG SDI CO., LTD., Yongin-si, Gyeonggi-do 17084 (KR)
(72) Inventor: OH, EUN SEOK, 17084 Yongin-si, Gyeonggi-do (KR); KWEON, TAE JOUNG, 17084 Yongin-si, Gyeonggi-do (KR)
(74) Representative: Gulde & Partner

(57) **Abstract**

The present disclosure relates to a secondary battery, and a problem to be solved is to provide a secondary battery in which that an electrolyte supplied to the inside of the secondary battery can be uniformly distributed, and to a manufacturing method of a secondary battery. To this end, in the present disclosure, provided is a secondary battery comprising:
an electrode assembly; and a case accommodating the electrode assembly, wherein the case comprises: an inlet portion that receives an electrolyte through an injection nozzle;
and an outlet portion that forms a passage through which some of the electrolyte flowing into the inlet portion is discharged to an outside of the case.

## Description

### FIELD

The present disclosure relates to a secondary battery and a manufacturing method of a secondary battery.

### BACKGROUND

Unlike a primary battery that cannot be charged, a secondary battery is a rechargeable and dischargeable battery. A low-capacity secondary battery may be used for various portable small-sized electronic devices, such as a smartphone, a feature phone, a notebook computer, a digital camera, or a camcorder, and a high-capacity secondary battery is widely used as a power source for motor drives, such as those in hybrid vehicles or electric vehicles. The secondary battery includes an electrode assembly consisting of a positive electrode and a negative electrode, a case accommodating the same, and electrode terminals connected to the electrode assembly.

The above information disclosed in this Background section is only for enhancement of understanding of the background of the invention and therefore it may contain information that does not constitute prior art.

### SUMMARY

The present disclosure relates to a secondary battery in which an electrolyte supplied to the inside of the secondary battery can be uniformly distributed, and to a manufacturing method of a secondary battery.

However, the technical problems to be achieved in the embodiment of the disclosure are not limited to the technical problems mentioned above, and other technical problems not mentioned herein will be clearly understood from the following description by those skilled in the art to which the disclosure belongs.

A secondary battery according to an aspect of the present disclosure, for solving the technical problems, may include: an electrode assembly; and a case accommodating the electrode assembly, wherein the case includes: an inlet portion that receives an electrolyte through an injection nozzle; and an outlet portion that forms a passage through which some of the electrolyte flowing into the inlet portion is discharged to an outside of the case.

The injection nozzle may not be part of the secondary battery, but may be used only during manufacture or refilling of the secondary battery.

In some embodiments, the case may include a pouch.

In some embodiments, the outlet portion may be located diagonally opposite the inlet portion. In some embodiments, the inlet portion may be located in an inlet portion area and the outlet portion may be located in an portion area, wherein the inlet portion area and the outlet portion area may be arranged such on the edges of the case that the length of the shortest (possibly curved) virtual line connecting the inlet portion area with the outlet portion area and running completely inside the case becomes maximized in comparison to other arrangements of the inlet portion area and the outlet portion area on the case. In such embodiments, the length of the flow path of the electrolyte between the inlet portion and the outlet portion within the case becomes maximized or at least extended in comparison to other arrangements of the inlet portion and the outlet portion on the case.

In some embodiments, the case may include a first pouch installed in succession to a gas bag of the case and having an inlet portion, and a second pouch extending from the first pouch and having an outlet portion.

In some embodiments, the gas bag may be removed from the case after an operation of degassing the case is completed.

In some embodiments, a length of the first pouch in a width direction may be greater than a length of the second pouch in the width direction. Here, the width direction may be a direction parallel to a plane or surface, along which the gas bag abuts against the first pouch, while being installed at the first pouch during an operation of degassing.

In some embodiments, lengths of the gas bag and the first pouch in a width direction may be equal to each other. Here, the width direction may be a direction parallel to a plane or surface, along which the gas bag abuts against the first pouch, while being installed at the first pouch during an operation of degassing.

In some embodiments, a lead tab connected to the electrode assembly may protrude outward from the first pouch.

In some embodiments, a length of the first pouch in a length direction may be smaller than a length of the second pouch in the length direction. Here, the length direction may be a direction perpendicular to a width direction.

In some embodiments, a length of the first pouch in a length direction may be equal to or greater than a length of the second pouch in the length direction. Here, the length direction may be a direction perpendicular to a width direction.

In some embodiments, a lead tab connected to the electrode assembly may protrude outward from the second pouch.

In some embodiments, the inlet portion may be formed on an edge of the first pouch facing the gas bag, and the outlet portion may be formed on an edge of the second pouch located diagonally from the inlet portion. Here, the edge of the second pouch, on which the outlet portion may be formed, may be perpendicular to the edge of the first pouch, on which the inlet may be formed.

A manufacturing method of a secondary battery according to a further aspect of the present disclosure, for solving the technical problems, may include the steps of: forming an inlet portion and an outlet portion in a case accommodating an electrode assembly; opening the outlet portion by operating a discharge head part; supplying an electrolyte to the inlet portion; and guiding discharge of the electrolyte to outside of the outlet portion in a state in which a discharge guide pipe provided in a discharge guide part is inserted inside of the outlet portion.

In some embodiments, the discharge head part may be located on both sides of the outlet portion, and the outlet portion may be opened by adsorbing the case through a suction pad in contact with an outside of the case.

In some embodiments, after the discharge of the electrolyte is completed, the manufacturing method may include a step in which the discharge guide part is separated from the outlet portion and a step in which the discharge head part seals the outlet portion.

In some embodiments, the discharge head part may be located on both sides of the outlet portion, and the outlet portion may be sealed by heating the case through a heating pad in contact with an outside of the case.

In some embodiments, a discharge rod provided in the discharge guide part may move inside the discharge guide pipe and may guide the discharge of the electrolyte to the outside of the outlet portion.

In some embodiments, the manufacturing method may further include: a step in which a weight of the electrolyte discharged to the outside of the outlet portion is measured while the discharge rod firstly descends; and a step in which the discharge rod secondly descends and the electrolyte is discharged through a connection pipe connected to the discharge guide pipe.

In some embodiments, when the electrolyte is supplied into an inside of the case, edges of the case, except for the inlet portion and the outlet portion, may be sealed.

In some embodiments, the outlet portion may be located diagonally opposite the inlet portion.

In some embodiments, a gas bag installed in succession to the case and the inlet portion may be in communication, and the outlet portion may be located diagonally opposite the inlet portion. In some embodiments, the gas bag may be removed from the case after an operation of degassing the case being completed.

According to the present disclosure, by forming a separate outlet portion for discharging an electrolyte in a case of a secondary battery, the electrolyte supplied into the case can be uniformly distributed within a short period of time, thereby improving productivity.

However, the technical effects to be achieved in the embodiment of the disclosure are not limited to the technical problems mentioned above, and other technical effects not mentioned herein will be clearly understood from the following description by those skilled in the art to which the disclosure belongs.

### BRIEF DESCRIPTION OF THE DRAWINGS

The following drawings attached to this specification illustrate preferred embodiments of the present disclosure, and serve to further understand the technical idea of the present disclosure together with the detailed description of the present disclosure, and thus, the present disclosure should not be construed as being limited to the matters described in such drawings.
FIG. 1 is a perspective view of an exemplary secondary battery according to a first embodiment of the present disclosure.
FIG. 2 is a plan sectional view of the secondary battery according to the first embodiment of the present disclosure.
FIG. 3 is a sectional view showing a state in which an electrolyte is supplied to the secondary battery according to the first embodiment of the present disclosure.
FIGS. 4 and 5 are sectional views showing the flow of electrolyte inside the secondary battery according to the first embodiment of the present disclosure.
FIG. 6 is a diagram showing a discharge head part and a discharge guide part, according to the first embodiment of the present disclosure.
FIG. 7 is a front sectional view showing a state in which a rod cap of the discharge guide part is elevated, according to the first embodiment of the present disclosure.
FIG. 8 is a front sectional view showing a state in which the rod cap descends and the electrolyte is lowered along a discharge guide pipe, according to the first embodiment of the present disclosure.
FIG. 9 is a front sectional view showing a state in which the electrolyte is recovered along a connection pipe and a recovery duct, according to the first embodiment of the present disclosure.
FIG. 10 is a perspective view showing the discharge head part, according to the first embodiment of the present disclosure.
FIG. 11 is a plan view showing the discharge head part located on both sides of the case, according to the first embodiment of the present disclosure.
FIG. 12 is a front view showing the discharge head part located on both sides of the case, according to the first embodiment of the present disclosure.
FIG. 13 is a plan view showing a state in which the case is moved by moving a suction pad, according to the first embodiment of the present disclosure.
FIG. 14 is a front view showing a state in which the case is sealed by a heating pad, according to the first embodiment of the present disclosure.
FIG. 15 is a sectional view showing an inlet portion and an outlet portion formed in the case, according to the first embodiment of the present disclosure.
FIG. 16 is a sectional view showing a state in which the inlet portion, the outlet portion, and the edges of the gas bag are sealed, according to the first embodiment of the present disclosure.
FIG. 17 is a sectional view showing a state in which an inlet portion and an outlet portion are formed in a case, according to a second embodiment of the present disclosure.
FIG. 18 is a sectional view showing a state in which the inlet portion, the outlet portion, and the edges of the gas bag are sealed, according to the second embodiment of the present disclosure.
FIG. 19 is a sectional view showing a state in which an electrolyte flowing into an inlet portion is moved to an outlet portion, according to a third embodiment of the present disclosure.
FIG. 20 is a sectional view showing a state in which an electrolyte flowing into an inlet portion is moved to an outlet portion on both sides in the width direction, according to a fourth embodiment of the present disclosure.
FIGS. 21A and 21B are perspective views showing a battery pack including an exemplary secondary battery according to the present disclosure.
FIG. 22A is a perspective view showing a vehicle including an example battery pack according to the present disclosure.
FIG. 22B is a side view showing a vehicle including an example battery pack according to the present disclosure.

### DETAILED DESCRIPTION

Hereinafter, the present disclosure will be described in detail. Prior to giving the following detailed description of the present disclosure, it should be noted that the terms and words used in the specification and the claims should not be construed as being limited to ordinary meanings or dictionary definitions but should be construed in a sense and concept consistent with the technical idea of the present disclosure, on the basis that the inventor can properly define the concept of a term to describe the disclosure in the best way possible. Therefore, the embodiments described in the specification and the configurations described in the drawings are only the most preferred embodiments of the present disclosure, and do not represent all of the technical ideas of the present disclosure. It is to be understood that there may be various equivalents and variations in place of them at the time of filing the present application. In addition, as used herein, the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof. In addition, when describing embodiments of the present disclosure, "can" and "may" may include "one or more embodiments of the present disclosure."

In addition, for a better understanding of the invention, The attached drawings are not drawn to scale and the dimensions of some components may be exaggerated. In addition, the same reference numbers may be assigned to the same components in different embodiments.

A reference to two objects in comparison being the same means that they are substantially the same. Thus, the wording "substantially the same" may include cases where the same is considered to be a low level in the related art, for example, a deviation within 5%. In addition, when any of parameters is referred to as being uniform in a given region, it may mean that the parameter is uniform from an average perspective.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, unless otherwise defined, a first element, component, region, layer or section described below could be termed a second element, component, region, layer or section, without departing from the scope of the present disclosure.

Throughout the specification, each component may be singular or plural, unless the context clearly indicates otherwise.

The arrangement of an arbitrary component on the "upper portion (or lower portion)" or "upper (or lower) portion" of a component means that an arbitrary component is placed in contact with the upper (or lower) surface of the component. In addition, it may mean that other components may be interposed between the component and any component disposed on (or under) the component.

Also, it will be understood that when an element is referred to as being "connected to," "coupled to," or "linked to" another element, these elements can be directly connected or coupled to each other, another intervening element may be present therebetween, or the respective elements may be connected, coupled, or linked to each other through another elements.

Throughout the specification, the expression "A and/or B" means A, B, or A and B, unless otherwise defined. That is, as used herein, the term "and/or" includes any and all combinations of one or more of the associated listed items. The expression "C to D" means C or more and D or less, unless otherwise defined.

As used herein, the terms are for describing embodiments of the present disclosure and are not intended to limit the disclosure.

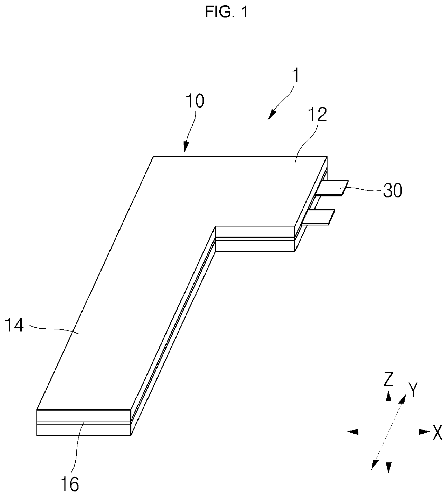

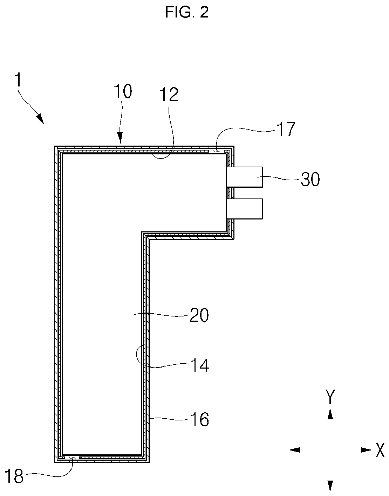

FIG. 1 is a perspective view of an exemplary secondary battery 1 according to a first embodiment of the present disclosure, and FIG. 2 is a plan sectional view of the secondary battery 1 according to the first embodiment of the present disclosure. In the secondary battery 1 according to the present disclosure, various modifications are possible within the technical concept of having an inlet portion 17 and an outlet portion 18 to induce the flow of an electrolyte 50. The secondary battery 1 according to the first embodiment of the present disclosure includes a case 10, an electrode assembly 20, a lead tab 30, and an electrolyte 50. In a state in which a gas bag 40 is connected to the case 10, the gas bag 40 may be separated from the case 10 after the injection of the electrolyte 50 and the discharge of the gas are completed. In a state where the gas bag 40 is not connected to the case 10, the electrolyte 50 may be injected into the inside of the case 10. In addition, the gas bag 40 is connected to the case 10 being in a state in which the injection of the electrolyte 50 has been completed to perform the operation of degassing the inside of the case 10. In addition, after the degassing operation in the case 10 is completed, the gas bag 40 may be separated from the case 10.

The case 10 may be made of a soft member, and in a state in which the outlet portion 18 is opened by a discharge head part 70, the electrolyte 50 may be discharged to the outlet portion 18 by means of a discharge guide part 80.

The case 10 that accommodates the electrode assembly 20 has a space formed therein, and various modifications are possible within the technical concept of surrounding the electrode assembly 20. The case 10 may include or be referred to as a pouch, a can, a housing, or an exterior material. In addition, the case 10 may include a metal such as steel, nickel-plated steel, a steel alloy, aluminum, an aluminum alloy, or a cold sheet for deep drawing (SPCE), or a laminated film or plastic constituting a pouch. When the case 10 is a pouch, it may be made of a soft film. The case 10 can be modified in various ways within the technical concept in which the electrode assembly 20 and the electrolyte 50 are accommodated inside.

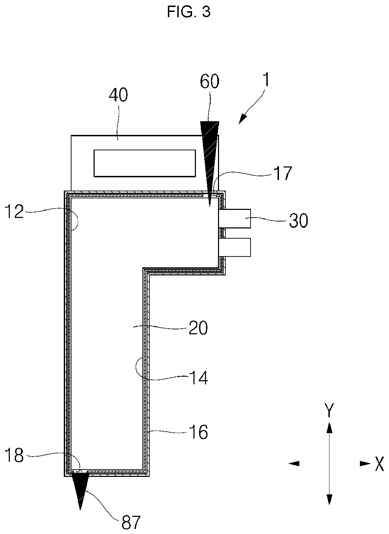

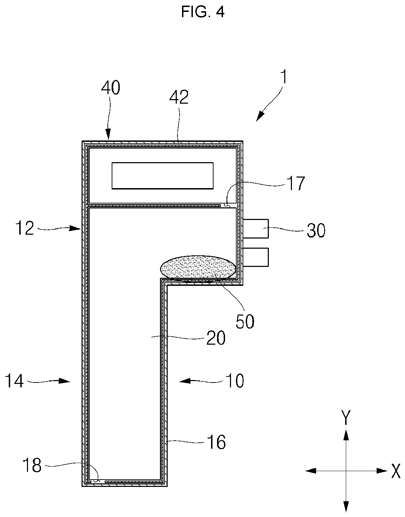

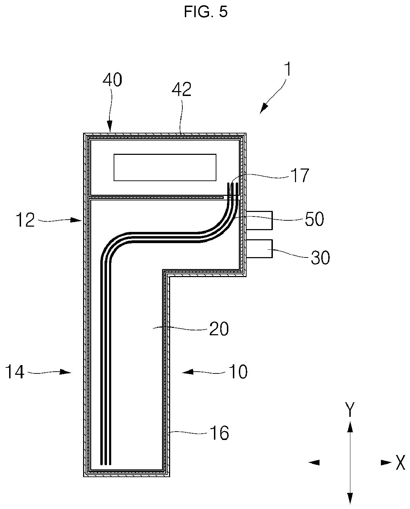

FIG. 3 is a sectional view showing a state in which the electrolyte 50 is supplied to the secondary battery 1 according to the first embodiment of the present disclosure, and FIGS. 4 and 5 are sectional views showing the flow of the electrolyte 50 inside the secondary battery 1 according to the first embodiment of the present disclosure. As shown in FIGS. 3 to 5, the case 10 according to the first embodiment of the present disclosure is a pouch and may be installed in a state of being connected to the gas bag 40 for discharging gas. The case 10 according to the first embodiment of the present disclosure is in communication with the gas bag 40 and may include the inlet portion 17 that receives the electrolyte 50 through an injection nozzle 60 and the outlet portion 18 that forms a passage for discharging some of the electrolyte 50 flowing into the inlet portion 17 to the outside of the case 10. The case 10 according to the first embodiment of the present disclosure may be formed of a pouch.

The case 10 according to the first embodiment of the present disclosure is installed in succession to the gas bag 40 and may include a first pouch 12 having the inlet portion 17, and a second pouch 14 extending from the first pouch 12 and having the outlet portion 18. The first pouch 12 extends in the width direction (X), and the second pouch 14 extends in the length direction (Y). The length of the first pouch 12 in the width direction (X) may be longer than the length of the second pouch 14 in the width direction (X). The first pouch 12 and the second pouch 14 may be integrally formed. The length of the first pouch 12 in the length direction (Y) may be shorter than the length of the second pouch 14 in the length direction (Y).

The outlet portion 18 according to the first embodiment of the present disclosure may be located diagonally opposite the inlet portion 17. Therefore, the path for the electrolyte 50 supplied to the inside of the case 10 through the outlet portion 18 to pass through the electrode assembly 20 located inside the case 10 to the inlet portion 17 increases, and thus the electrolyte 50 can be uniformly supplied to the inside of the case 10. The inlet portion 17 according to the first embodiment of the present disclosure is formed at the edge of the first pouch 12 facing the gas bag 40, and the outlet portion 18 is formed at the edge of the second pouch 14 located in a diagonal direction of the inlet portion 17. The edges of the case 10 used as a pouch are sealed by heat fusion, and a portion where the inlet portion 17 and the outlet portion 18 are formed is opened to become a passage for the electrolyte 50 to move. After the supply of the electrolyte 50 is completed, the outlet portion 18 may be sealed by heat fusion. The inlet portion 17 may also be modified in various ways, including being sealed with the outlet portion 18 or being sealed after a degassing operation is completed.

The gas bag 40 is connected to the upper side of the first pouch 12, and the second pouch 14 may be successively installed below the first pouch 12. In a state in which the edges of the case 10, except for the inlet portion 17 and the outlet portion 18, are sealed, the injection nozzle 60 may be installed in the inlet portion 17, and a discharge guide pipe 87, which is described herein, may be installed in the outlet portion 18. The electrolyte 50 supplied to the inside of the case 10 through the injection nozzle 60 moves inside the case 10 to then be discharged to the outside of the case 10 through the discharge guide pipe 87 connected to the outlet portion 18.

Since the inlet portion 17 and the outlet portion 18 are located in diagonally opposite directions, the movement path of the electrolyte 50 moving inside the case 10 is formed to be long, and the electrolyte 50 is uniformly distributed inside the case 10. In addition, the pressure of the inlet portion 17 where the electrolyte 50 is supplied is higher than the pressure of the outlet portion 18 where the electrolyte 50 is discharged. Therefore, due to a pressure difference between the inlet portion 17 and the outlet portion 18, the electrolyte 50 flows from the inlet portion 17 toward the outlet portion 18.

The electrode assembly 20 may be accommodated inside the case 10 together with the electrolyte 50. The electrode assembly 20 may include or be referred to as an electrode group, an electrode body, or a jelly roll. The electrode assembly 20 may include a first electrode plate, a second electrode plate, and a separator between the first electrode plate and the second electrode plate, and may be wound in a cylindrical shape. In some examples, in the electrode assembly 20, the first electrode plate, the second electrode plate, and the separator may be stacked in a plate shape.

The first electrode plate may include a first substrate and a first active material layer located on the first substrate. In the first substrate, a first uncoated portion or a first tab where the first active material layer is not located may extend outward, and the first tab may be electrically connected to a positive electrode current collector plate. In the present disclosure, the first tab may be referred to as a first uncoated portion or a positive electrode substrate tab.

The second electrode plate may include a second substrate and a second active material layer located on the second substrate. In the second substrate, a second uncoated portion or a second tab where the second active material layer is not located may extend outward, and the second tab may be electrically connected to a negative electrode current collector plate. In some examples, the first tab and the second tab may extend in the same direction. In the present disclosure, the second tab may be referred to as a second uncoated portion or a negative electrode substrate tab.

The first electrode plate may function as a positive electrode. In this case, the first substrate may be made of, for example, an aluminum foil, and the first active material layer may include, for example, a transition metal oxide. The second electrode plate may function as a negative electrode. In this case, the second substrate may be made of, for example, a copper foil or a nickel foil, and the second active material layer may include, for example, graphite and/or silicon.

The separator can prevent short circuits between the first and second electrode plates while allowing the movement of lithium ions. In some examples, the separator may be located on opposite sides of a first electrode plate, or may be located on opposite sides of a second electrode plate.

The lead tab 30 is electrically connected to the electrode assembly 20, and various modifications are possible within the technical concept of protruding to the outside of the case 10. The lead tab 30 may be electrically connected to the first tab and the second tab. The lead tab 30 according to the first embodiment of the present disclosure may protrude outward from the first pouch 12.

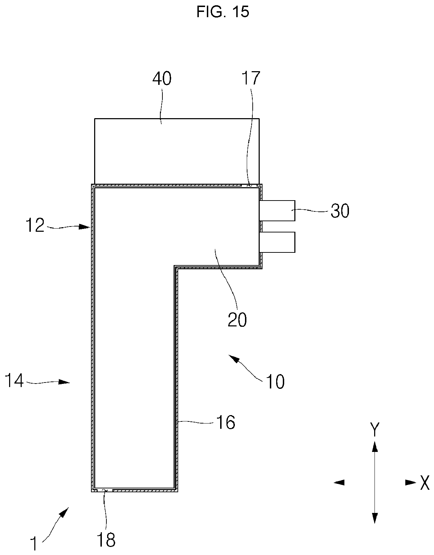

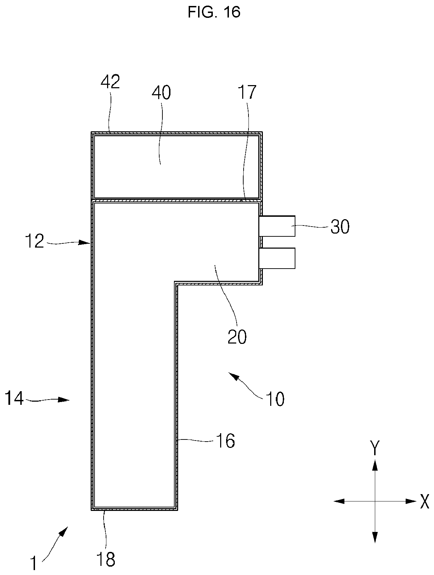

FIG. 15 is a sectional view showing the inlet portion 17 and the outlet portion 18 formed in the case 10, according to the first embodiment of the present disclosure, and FIG. 16 is a sectional view showing a state in which the inlet portion 17, the outlet portion 18, and the edges of the gas bag 42 are sealed, according to the first embodiment of the present disclosure. As shown in FIGS. 15 and 16, the gas bag 40 is installed in succession to the case 10 used as a pouch. In some examples, the lengths of the gas bag 40 and the first pouch 12 in the width direction (X) may be equal to each other.

As shown in FIG. 15, in a state in which the edges of the gas bag 40 are not sealed, the inlet portion 17 and the outlet portion 18 formed in the case 10 are in an open state. The operation of supplying the electrolyte 50 through the inlet portion 17 and discharging some of the electrolyte 50 through the outlet portion 18 allows the electrolyte 50 to be uniformly distributed in the case 10. After the supply of the electrolyte 50 is completed, the edges of the gas bag 40 are sealed, forming a second sealing edge 42. After the supply of the electrolyte 50 is completed, the outlet portion 18 may be sealed and the inlet portion 17 may be sealed, or the inlet portion 17 may not be sealed to form a passage connected to the gas bag 40. The gas generated within the case 10 is moved to the gas bag 40, and when the degassing operation of the case 10 is completed, the inlet portion 17 is sealed and the gas bag 40 is separated from the case 10. In the pouch-type secondary battery 1, the shape and function of the gas bag 40 are known technologies, accordingly, detailed descriptions thereof will not be given.

The electrode assembly 20 may be accommodated inside a pouch together with the electrolyte 50. Here, the electrolyte 50 may include a lithium salt, such as LiPF6 or LibF4, dissolved in an organic solvent, such as ethylene carbonate (EC), propylene carbonate (PC), diethyl carbonate (DEC), ethyl methyl carbonate (EMC), or dimethyl carbonate (DMC).

The injection nozzle 60 may pass through the gas bag 40 and be installed toward the inside of the case 10 through the inlet portion 17. The electrolyte 50 may be supplied to the inside of the case 10 through the injection nozzle 60, which may be a funnel-shaped duct.

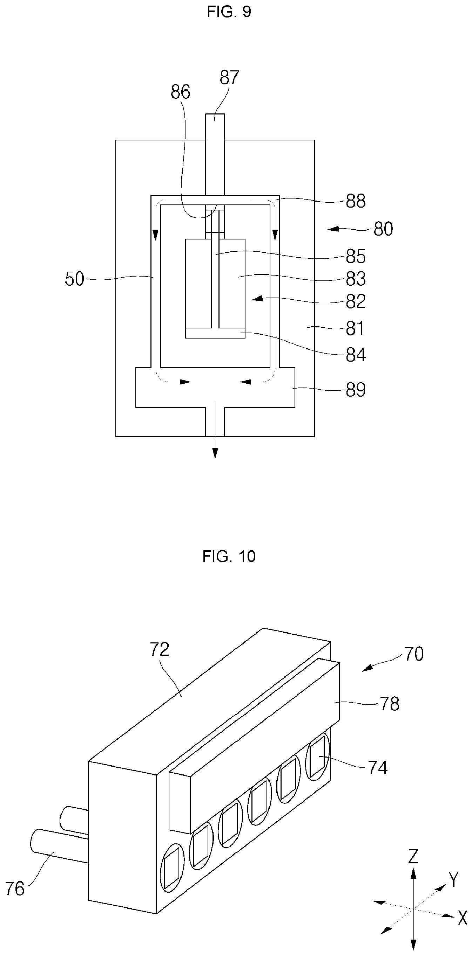

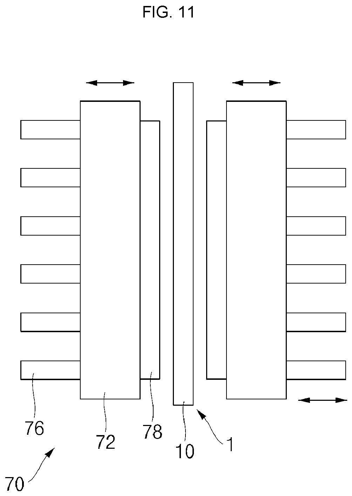

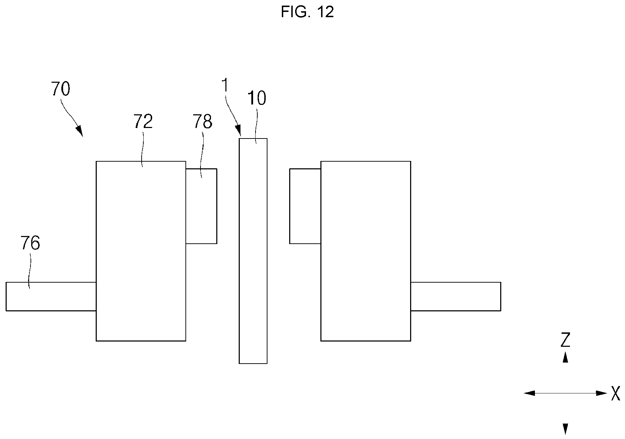

FIG. 10 is a perspective view showing the discharge head part 70, according to the first embodiment of the present disclosure, FIG. 11 is a plan view showing the discharge head part 70 located on both sides of the case 10, according to the first embodiment of the present disclosure, and FIG. 12 is a front view showing the discharge head part 70 located on both sides of the case 10, according to the first embodiment of the present disclosure. The discharge head part 70 is located on both sides of the width direction (X) of the case 10, and can be moved in a direction toward the case 10 or in a direction away from the case 10. The discharge head part 70 may function to open the outlet portion 18 of the case 10, which is a pouch. In addition, the discharge head part 70 heats and seals the outlet portion 18 or the case 10 surrounding the outlet portion 18, thereby preventing the electrolyte 50 from being discharged.

The discharge head part 70 according to the first embodiment of the present disclosure includes a head body 72, a suction pad 74, a support rod 76, and a heating pad 78.

The head body 72 is installed in a shape facing the case 10. The head body 72 can be modified in various ways within the technical concept of supporting the suction pad 74 and the heating pad 78. The head body 72 may have various shapes, including a rectangular parallelepiped.

The suction pad 74 is installed in plural numbers along the longitudinal direction (Y) of the head body 72. Since the suction pads 74 include a plurality of holes, the pouch case 10 can be moved by vacuum pressure. The suction pads 74 may be located below the head body 72, and the heating pad 78 may be located above the suction pads 74. The suction pads 74 may be attached to the lower side of the pouch by suctioning air.

The support rods 76 are provided in the same number as the suction pads 74, which are connected to the suction pads 74, respectively. An air movement passage is provided inside each of the support rods 76. The support rods 76 are individually connected to a linear drive unit, and thus move in a linear direction together with the suction pads 74.

The heating pad 78 is heated by the supply of electricity and seals the pouch by heat fusion. The heating pad 78 may have a rectangular or cuboid shape.

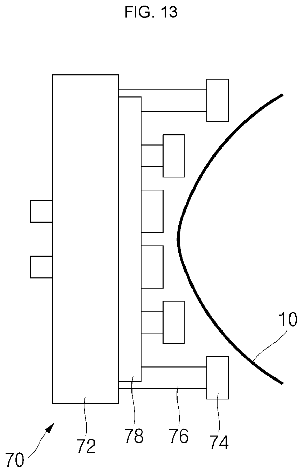

FIG. 13 is a plan view showing a state in which the case 10 is moved by moving the suction pads 74, according to the first embodiment of the present disclosure. As shown in FIG. 13, the case 10, which is a pouch, is attached to the suction pads 74 due to the vacuum pressure of the suction pads 74. In addition, the pouch moves together with the suction pads 74 by individual movement of the support rods 76. Pressure is generated due to air suction, and after attaching the suction pads 74 to the pouch, the respective suction pads 74 are retracted differently to open the outlet portion 18 of the pouch. The centrally located suction pad 74 moves backwards the most.

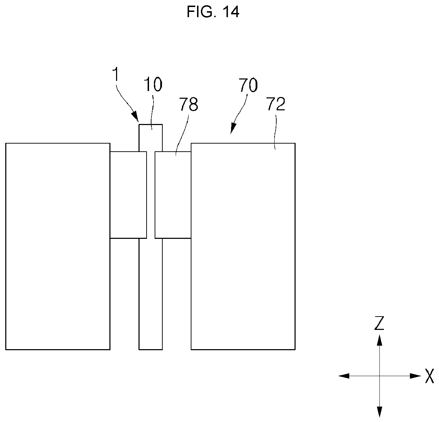

FIG. 14 is a front view showing a state in which the case 10 is sealed by a heating pad 78, according to the first embodiment of the present disclosure. As shown in FIG. 14, after the electrolyte 50 is discharged, in a state in which the heating pad 78 advances toward the pouch along with the head body 72 to be in contact with the pouch, the pouch is sealed by thermal fusion. The sealing of the pouch is achieved by the heat of the heating pad 78.

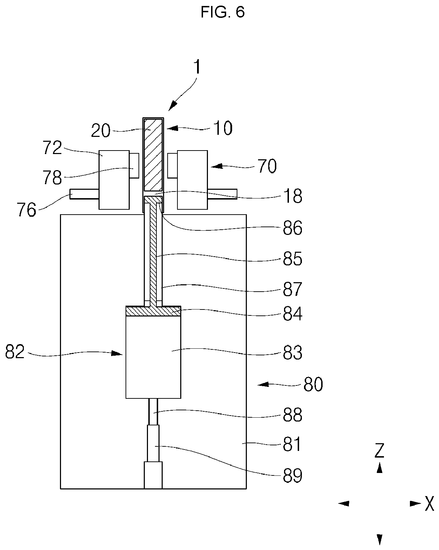

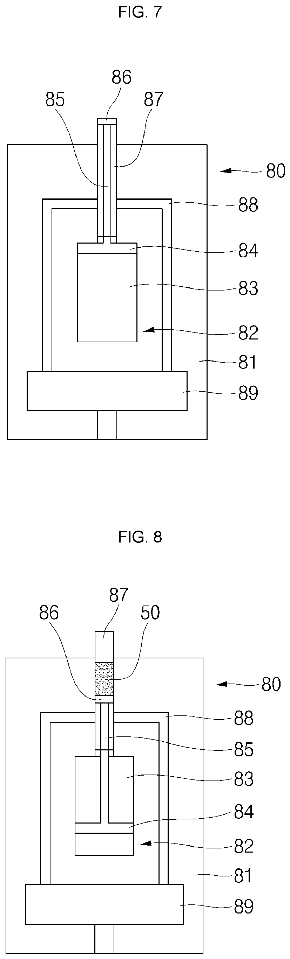

FIG. 6 is a diagram showing the discharge head part 70 and the discharge guide part 80, according to the first embodiment of the present disclosure, and FIG. 7 is a front sectional view showing a state in which a rod cap 86 of the discharge guide part 80 ascends, according to the first embodiment of the present disclosure. As shown in FIGS. 6 and 7, the discharge guide part 80 can be modified in various ways within the technical concept of guiding the discharge of the electrolyte 50 through the outlet portion 18. In a state in which the outlet portion 18 is opened by the operation of the discharge head part 70, the discharge guide pipe 87 of the discharge guide part 80 move upward and move inside the outlet portion 18. The discharge guide part 80 according to the first embodiment of the present disclosure includes a discharge body 81, a discharge driver unit 82, the discharge guide pipe 87, a connection pipe 88, and a recovery duct 89.

The discharge body 81 is located below the case 10 and can be moved up and down by means of a separate driving device. As the discharge body 81 moves upward, the discharge guide pipe 87 also moves in the vertical direction (Z).

The discharge driver unit 82 is installed inside the discharge body 81 and can move a discharge rod 85 toward the outlet portion 18. The discharge driver unit 82 according to the first embodiment of the present disclosure includes a cylinder body 83, a piston 84, the discharge rod 85, and the rod cap 86. The cylinder body 83 is located inside the discharge body 81, and the piston 84 is located inside the cylinder body 83 and moves straight in the vertical direction (Z). The piston 84 may be moved by supplying hydraulic pressure. The discharge rod 85 connected to the piston 84 extends upward and moves in the vertical direction (Z) together with the piston 84. The rod cap 86 is installed on the upper side of the discharge rod 85. The cylindrical discharge guide pipe 87 is located outside the discharge rod 85 and the rod cap 86. The discharge guide pipe 87 extends in the vertical direction (Z). The discharge guide pipe 87 may be fixedly installed on the discharge body 81. Therefore, the discharge guide pipe 87 and the discharge body 81 may be moved in the vertical direction (Z) by the operation of a driving device such as a cylinder. The inner diameter of the discharge guide pipe 87 may be equal to or greater than the outer diameter of the rod cap 86. Since a sensor for measuring a weight is installed on the rod cap 86, the weight of the electrolyte 50 provided on the upper side of the rod cap 86 can be measured. In a state in which the outlet portion 18 is open, the discharge guide pipe 87 is inserted into the outlet portion 18. The piston 84 and the rod cap 86 are also in an elevated state.

FIG. 8 is a front sectional view showing a state in which the rod cap 86 descends and the electrolyte 50 is lowered along the discharge guide pipe 87, according to the first embodiment of the present disclosure. As shown in FIG. 8, when the piston 84 first descends, the discharge rod 85 and the rod cap 86 also first descend accordingly. The rod cap 86 stops on the upper side of the part where the connection pipe 88 is connected to the discharge guide pipe 87. The sensor provided in the rod cap 86 measures the weight of the electrolyte 50 contained inside the discharge guide pipe 87 and transmits the measured value to a control unit.

FIG. 9 is a front sectional view showing a state in which the electrolyte 50 is recovered along the connection pipe 88 and the recovery duct 89, according to the first embodiment of the present disclosure. As shown in FIG. 9, when the piston 84 secondly descends, the discharge rod 85 and the rod cap 86 also secondly descend. The rod cap 86 stops on the lower side where the connection pipe 88 is connected to the discharge guide pipe 87. Therefore, the electrolyte 50 that has descended along the rod cap 86 moves along the connection pipe 88 connected to the discharge guide pipe 87 and then moves to the outside of the discharge body 81 along the recovery duct 89 located below the connection pipe 88.

The connection pipe 88 is in communication with the discharge guide pipe 87, forming a passage through which the discharge of the electrolyte 50 is guided. The lower side of the connection pipe 88 is connected to the recovery duct 89, and the recovery duct 89 forms a conduit that allows the electrolyte 50 to be guided to the outside of the discharge body 81.

A manufacturing method of the secondary battery 1 according to the first embodiment of the present disclosure includes the step of forming the inlet portion 17 and the outlet portion 18 in the case 10 that accommodates the electrode assembly 20. The inlet portion 17 is formed on the upper side of the case 10, which may be a pouch, and the outlet portion 18 is formed on the lower side of the case 10.

In the present disclosure, the step of opening the outlet portion 18 by operating the discharge head part 70, is included. Since the discharge head part 70 opens the outlet portion 18 by opening the pouch, a passage through which the electrolyte 50 can be discharged is secured. A discharge passage is secured by inserting the discharge guide pipe 87 into the opened outlet portion 18. The discharge head part 70 is located on both sides of the outlet portion 18, and the outlet portion 18 may be opened by suctioning the case 10 through the suction pads 74 in contact with the outside of the case 10.

In the present disclosure, the steps of supplying the electrolyte 50 to the inlet portion 17 and guiding the discharge of the electrolyte 50 to the outside of the outlet portion 18 in a state in which the discharge guide pipe 87 provided in the discharge guide part 80 is inserted into the inside of the outlet portion 18, are included. When the electrolyte 50 is supplied to the inside of the case 10, the edges of the case 10, except for the inlet portion 17 and the outlet portion 18, can be sealed. The outlet portion 18 may be located diagonally opposite the inlet portion 17. In some examples, the gas bag 40 installed in succession to the case 10, and the inlet portion 17 are in communication with each other, and the outlet portion 18 may be located diagonally opposite the inlet portion 17.

Along with the operation of injecting the electrolyte 50 into the inside of the case 10 consisting of a pouch through the inlet portion 17, the piston 84 is moved backwards to allow the rod cap 86 to descend. A discharge rod 85 provided in the discharge guide part 80 moves inside the discharge guide pipe 87 and guides the discharge of the electrolyte 50 to the outside of the outlet portion 18. As the rod cap 86 descends, the pressure inside the case 10 where the outlet portion 18 is located decreases, and thus the electrolyte 50 supplied to the inlet portion 17 quickly moves to the outlet portion 18. In a state in which the rod cap 86 stops above a connected portion between the connection pipe 88 and the discharge guide pipe 87, the weight of the discharged electrolyte 50 is measured. Since the weight of the discharged electrolyte 50 is detected, it is possible to more accurately set the additional amount of the electrolyte 50 supplied to the case 10.

After the discharge of the electrolyte 50 is completed, the manufacturing method may include a step in which the discharge guide part 80 is separated from the outlet portion 18 and a step in which the discharge head part 70 seals the outlet portion 18. The discharge head part 70 is located on both sides of the outlet portion 18, and the outlet portion 18 can be sealed by heating the case 10 through the heating pad 78 in contact with the outside of the case 10. After the supply of the electrolyte 50 is completed, the discharge head part 70 moves forward to seal the case 10. The lower part of the case 10, which may be a pouch, is sealed, and the supply of the electrolyte 50 is terminated.

As the piston 84 descends again, the inlet of the connection pipe 88 connected to the discharge guide pipe 87 is opened, and thus the electrolyte 50 is moved to the recovery duct 89 through the connection pipe 88. The discharged electrolyte 50 can be recycled.

As described above, in the present disclosure, by separately providing an outlet for the discharge of the electrolyte 50, the imbalance and partial accumulation of the electrolyte 50 within the case 10 can be resolved, and the electrolyte 50 can be guided to be rapidly and uniformly distributed within the electrode assembly 20.

In addition, in the present disclosure, the inlet portion 17, which is an injection port of the electrolyte 50, is narrowed, so that an injection process begins at a specific location of the secondary battery 1. In addition, the outlet portion 18, which is an outlet for discharging the electrolyte 50, is formed on the opposite side of the inlet portion 17, thereby enabling the discharge of the electrolyte 50.

Then, after injecting the electrolyte 50, discharging is performed so that the electrolyte 50 accumulated in the case 10 moves toward the outlet portion 18, and thus the electrolyte 50 can be uniformly impregnated in the electrode assembly 20. The discharge guide part 80 is installed in the outlet portion 18 to guide the discharged electrolyte 50 to be the discharged and to measure the weight of the discharged electrolyte 50.

Conventionally, the electrolyte 50 is accumulated in a specific location of a pouch, and impregnation of the electrode assembly 20 by diffusion is limited. However, in the present disclosure, the movement path of the electrolyte 50 leading to the inlet portion 17 and the outlet portion 18 is formed, and thus the impregnation of the electrolyte 50 can be performed uniformly and quickly.

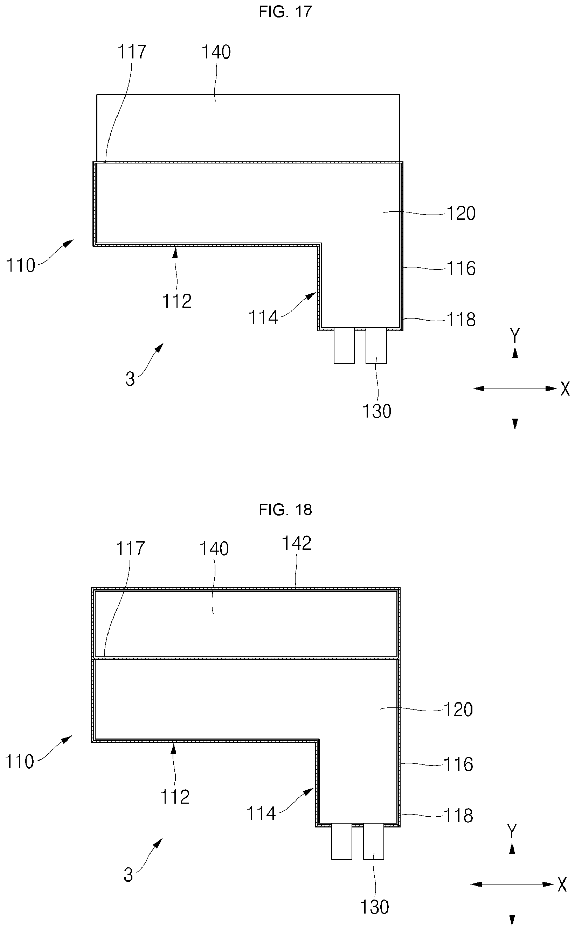

FIG. 17 is a sectional view showing a state in which an inlet portion 117 and an outlet portion 118 are formed in a case 110, according to a second embodiment of the present disclosure. As shown in FIG. 17, a secondary battery 3 according to the second embodiment of the present disclosure includes a case 110, an electrode assembly 120, a lead tab 130, and a gas bag 140. The secondary battery 3 according to the second embodiment of the present disclosure has the same function as in the first embodiment, differing only in the shape.

The case 110 according to the second embodiment of the present disclosure may be installed in a state of being connected to the gas bag 140 for discharging gas. The case 110 according to the second embodiment of the present disclosure may include an inlet portion 117 that is in communication with the gas bag 140 and receives an electrolyte 50 through an injection nozzle 60 and an outlet portion 118 that forms a passage through which some of the electrolyte 50 introduced into the inlet portion 117 is discharged to the outside of the case 110. The case 110 according to the second embodiment of the present disclosure may be formed as a pouch.

The case 110 according to the second embodiment of the present disclosure may include a first pouch 112 installed in succession to the gas bag 140 and having the inlet portion 117, and a second pouch 114 extending from the first pouch 112 and having the outlet portion 118. The first pouch 112 extends in the width direction (X), and the second pouch 114 extends in the longitudinal direction (Y). The length of the first pouch 112 in the width direction (X) is greater than the length of the second pouch 114 in the width direction (X). The length of the first pouch 112 in the length direction (Y) is greater than or equal to the length of the second pouch 114 in the length direction (Y).

The outlet portion 118 according to the second embodiment of the present disclosure is located diagonally opposite the inlet portion 117.

The lead tab 130 connected to the electrode assembly 120 may protrude outward from the second pouch 114. The lead tab 130 is installed at the bottom end of the second pouch 114 extending downward from the first pouch 112. The inlet portion 117 is formed on the upper side of the first pouch 112, and the outlet portion 118 is formed on the lower side of the second pouch 114 in the diagonally opposite direction of the inlet portion 117.

In a state in which the edges of the gas bag 140 are not sealed, the inlet portion 117 and the outlet portion 118 formed in the case 110 are in an open state. By supplying the electrolyte 50 through the inlet portion 117 and discharging some of the electrolyte 50 through the outlet portion 118, the electrolyte 50 in the case 110 can be uniformly distributed.

FIG. 18 is a sectional view showing a state in which the inlet portion 117, the outlet portion 118, and the edges of a gas bag 140 are sealed, according to the second embodiment of the present disclosure. As shown in FIG. 18, after the supply of the electrolyte 50 is completed, the edges of the gas bag 140 are sealed, forming a second sealing edge 142. After the supply of the electrolyte 50 is completed, the outlet portion 118 is sealed. In addition, the inlet portion 117 may be sealed, or if necessary, the inlet portion 117 may not be sealed, forming a passage connected to the gas bag 140. The gas generated within the case 110 is moved to the gas bag 140, and when the degassing operation of the case 110 is completed, the inlet portion 117 is sealed and the gas bag 140 is separated from the case 110.

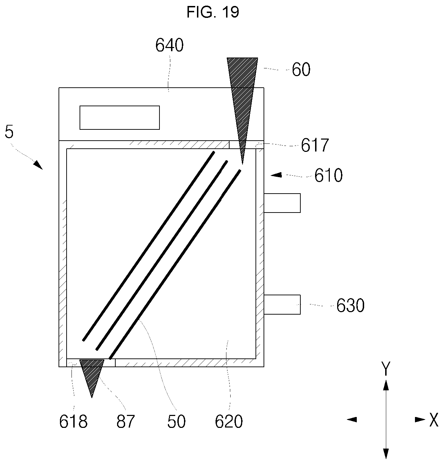

FIG. 19 is a sectional view showing a state in which an electrolyte 50 flowing into an inlet portion 617 is moved to an outlet portion 618, according to a third embodiment of the present disclosure.

As shown in FIG. 19, a secondary battery 5 according to the third embodiment of the present disclosure includes a case 610, an electrode assembly 620, a lead tab 630, and a gas bag 640. The secondary battery 5 according to the third embodiment of the present disclosure has the same function as in the first embodiment, differing only with respect to a portion where a single pouch is formed.

The case 610 according to the third embodiment of the present disclosure may be installed in a state of being connected to the gas bag 640 for discharging gas. The case 610 according to the third embodiment of the present disclosure may include an inlet portion 617 that is in communication with the gas bag 640 and receives an electrolyte 50 through an injection nozzle 60 and an outlet portion 618 that forms a passage through which some of the electrolyte 50 introduced into the inlet portion 617 is discharged to the outside of the case 610. The case 110 according to the second embodiment of the present disclosure may be formed of a pouch.

The case 610 according to the third embodiment of the present disclosure may have a single space formed. For example, the case 610 has a square shape. The outlet portion 618 according to the third embodiment of the present disclosure may be located diagonally opposite the inlet portion 617.

The lead tab 630 connected to an electrode assembly 620 may laterally protrude from the second pouch 114. The inlet portion 617 is formed on the upper side of the case 610, and the outlet portion 618 is formed on the lower side of the case 610 that is diagonally opposite the inlet portion 617.

In a state in which the edges of the gas bag 640 are not sealed, the inlet portion 617 and the outlet portion 618 formed in the case 610 are in an open state. The operation of supplying the electrolyte 50 through the inlet portion 617 and discharging some of the electrolyte 50 through the outlet portion 618 allows the electrolyte 50 to be uniformly distributed in the case 610.

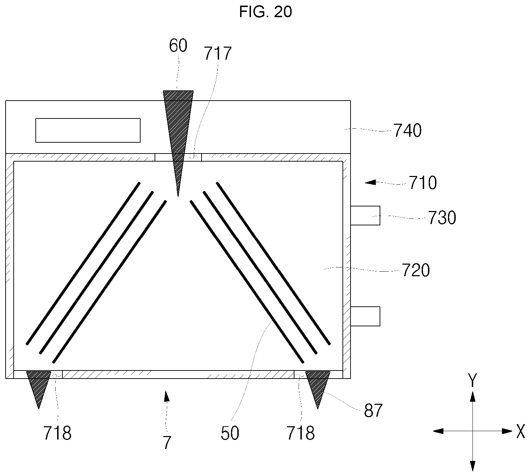

FIG. 20 is a sectional view showing a state in which an electrolyte 50 flowing into an inlet portion 717 is moved to an outlet portion 718 on both sides in the width direction (X), according to a fourth embodiment of the present disclosure. As shown in FIG. 20, a large-sized secondary battery 7 may be provided with a plurality of outlet portions 718. When the outlet portion 718 is provided in plural numbers (e.g., multiple outlet portions 718 are provided), the speed of the electrolyte 50 moving inside the case 710 may increase, and thus the time for the electrolyte 50 to be uniformly distributed in the electrode assembly 720 can be reduced.

The secondary battery 7 according to the fourth embodiment of the present disclosure includes a case 710, an electrode assembly 720, a lead tab 730, and a gas bag 740. The secondary battery 7 according to the fourth embodiment of the present disclosure has the same function as in the first embodiment, differing only with respect to a portion where a single pouch is formed.

The case 710 according to the fourth embodiment of the present disclosure the present disclosure may be installed in a state of being connected to the gas bag 740 for discharging gas. The case 710 according to the fourth embodiment of the present disclosure the present disclosure is large sized and is in communication with the gas bag 740. The case 710 may include an inlet portion 717 that receives the electrolyte 50 through an injection nozzle 60 and an outlet portion 718 that forms a passage through which some of the electrolyte 50 introduced into the inlet portion 717 is discharged to the outside of the case 710. The case 710 according to the fourth embodiment of the present disclosure may be formed as a pouch.

The case 710 according to the fourth embodiment of the present disclosure may have a large-sized single space formed. For example, the case 710 has a square shape. The outlet portion 718 according to the fourth embodiment of the present disclosure may be located diagonally opposite the inlet portion 717. The inlet portion 717 may be located at the center of the upper side of the case 710, and the outlet portion 718 may be located on both sides of the lower part of the case 710. The lead tab 730 connected to the electrode assembly 720 may protrude laterally from the case 710.

In a state in which the edges of the gas bag 740 are not sealed, the inlet portion 717 and the outlet portion 718 formed in the case 710 are in an open state. The operation of supplying the electrolyte 50 through the inlet portion 717 and discharging some of the electrolyte 50 through the outlet portion 718 allows the electrolyte 50 to be uniformly distributed in the case 710.

The electrode assemblies 20, 120, 620, and 720 of the present disclosure are described in more detail herein.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

The batteries according to the above-described embodiments can be used to manufacture a battery pack.

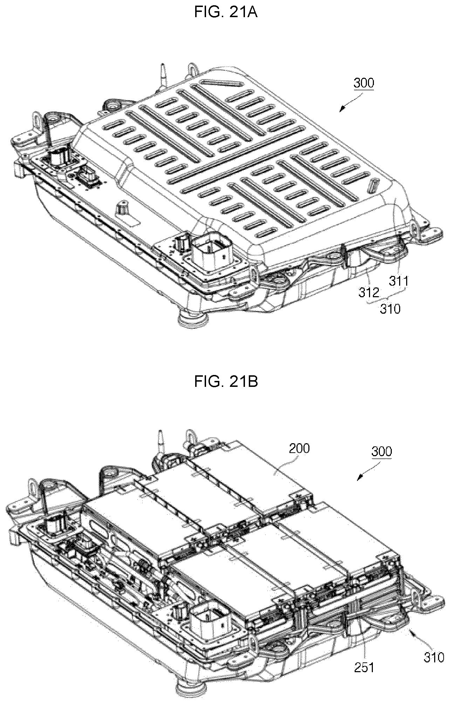

FIGS. 21A and 21B are perspective views showing a battery pack including an exemplary secondary battery according to the present disclosure. Referring to FIGS. 21A and 21B, the battery pack 300 may include a plurality of battery modules 200 and a housing 310 to accommodate the plurality of battery modules 200. For example, the housing 310 may comprise a first and a second housing 311, 312 that are coupled in facing directions with the plurality of battery modules 200 interposed between them. The plurality of battery modules 210 can be electrically connected to each other using a bus bar 251, and the plurality of battery modules 200 can be electrically connected in series/parallel or a mixed series-parallel manner to obtain the required electrical output. In the drawings, for the sake of convenience, components such as bus bars, cooling units, and external terminals for the electrical connection of battery cells are omitted. In some embodiments, the battery pack 300 can be mounted on a vehicle. The vehicle may be, for example, an electric vehicle, a hybrid vehicle, or a plug-in hybrid vehicle. The vehicle can include both four-wheel and two-wheel vehicles.

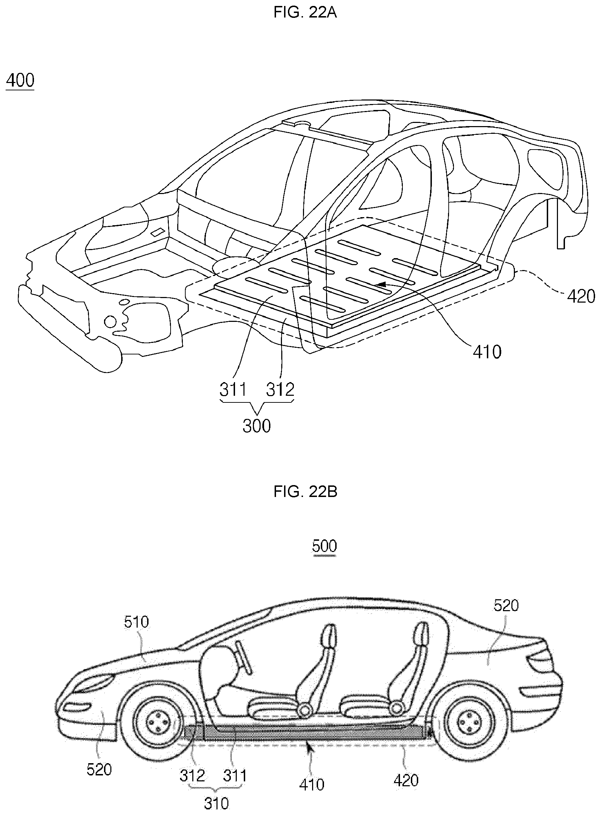

FIGS. 22A and 22B are a perspective view and a side view showing a vehicle including an example battery pack according to the present disclosure.

In FIG. 22A, the battery pack 300 may include a battery pack cover 311, which is part of the vehicle underbody 410 and may correspond to the first housing, and a pack frame 312, which is placed beneath the vehicle underbody 410 and may correspond to the second housing. The battery pack cover 311 and pack frame 312 may be structurally integrated with the vehicle floor 420. The vehicle underbody 410 separates the interior and exterior of the vehicle, and the pack frame 312 may be positioned outside the vehicle.

As shown in FIG. 22B, the vehicle 500 can be assembled with additional components such as a hood 510 at the front of the vehicle body 400 and fenders 520 located at the front and rear of the vehicle. The vehicle 500 includes the battery pack 300 comprising the battery pack cover 311 and the pack frame 312, and the battery pack 300 can be coupled to the vehicle body part 400.

While the foregoing embodiment is only one embodiment for carrying out the present disclosure, which is not limited to the embodiment, it will be understood by a person skilled in the art that various modifications and changes in form and details may be made therein within the equivalent scope of the technical idea of the present disclosure as defined by the following claims.

## Claims

1. A secondary battery (1, 3, 5, 7) comprising:
an electrode assembly (20, 120, 620, 720); and
a case (10, 110, 610, 710) accommodating the electrode assembly (20, 120, 620, 720),
wherein the case (10, 110, 610, 710) comprises:
an inlet portion (17, 117, 617, 717) that receives an electrolyte (50) through an injection nozzle (60); and
an outlet portion (18, 118, 618, 718) that forms a passage through which some of the electrolyte (50) flowing into the inlet portion (17, 117, 617, 717) is discharged to an outside of the case (10, 110, 610, 710).

2. The secondary battery (1, 3, 5, 7) as claimed in claim 1, wherein the case (10, 110, 610, 710) includes a pouch.

3. The secondary battery (1, 3, 5, 7) as claimed in claim 1 or 2, wherein the outlet portion (18, 118, 618, 718) is located diagonally opposite the inlet portion (17, 117, 617, 717).

4. The secondary battery (1, 3) as claimed in any one of claims 1 to 3, wherein the case (10, 110, 610) includes a first pouch (12, 112) installed in succession to a gas bag (40, 140, 640) of the case (10, 110, 610) and having an inlet portion (17, 117, 617), and a second pouch (14, 114) extending from the first pouch (12, 112) and having an outlet portion (18, 118, 618), and wherein the gas bag (40, 140, 640) is configured to be removed from the case (10, 110, 610) after an operation of degassing the case (10, 110, 610) is completed.

5. The secondary battery (1, 3) as claimed in claim 4, wherein a length of the first pouch (12, 112) in a width direction is greater than a length of the second pouch (14, 114) in the width direction.

6. The secondary battery (1, 3) as claimed in claim 4, wherein a length of the gas bag (40, 140, 640) in a width direction is equal to a length of the first pouch (12, 112) in the width direction.

7. The secondary battery (1) as claimed in any one of claims 4 to 6,
wherein a lead tab (30) connected to the electrode assembly (20) protrudes outward from the first pouch (12); and/or
wherein a length of the first pouch (12) in a length direction is smaller than a length of the second pouch (14) in the length direction.

8. The secondary battery (3) as claimed in any one of claims 4 to 6, wherein a length of the first pouch (112) in a length direction is equal to or greater than a length of the second pouch (114) in the length direction.

9. The secondary battery (3) as claimed in any one of claims 4 to 6 or claim 8,
wherein a lead tab (130) connected to the electrode assembly (120) protrudes outward from the second pouch (114); and/or
wherein the inlet portion (117) is formed on an edge of the first pouch (112) facing the gas bag (140), and the outlet portion (118) is formed on an edge of the second pouch (114) located diagonally from the inlet portion (117).

10. A manufacturing method of a secondary battery (1, 3, 5, 7), comprising the steps of:
forming an inlet portion (17, 117, 617, 717) and an outlet portion (18, 118, 618, 718) in a case (10, 110, 610, 710) accommodating an electrode assembly (20, 120, 620, 720);
opening the outlet portion (18, 118, 618, 718) by operating a discharge head part (70);
supplying an electrolyte (50) to the inlet portion (17, 117, 617, 717); and
guiding discharge of the electrolyte (50) to outside of the outlet portion (18, 118, 618, 718) in a state in which a discharge guide pipe (87) provided in a discharge guide part (80) is inserted inside of the outlet portion (18, 118, 618, 718).

11. The manufacturing method as claimed in claim 10, wherein the discharge head part (70) is located on both sides of the outlet portion (18, 118, 618, 718), and the outlet portion (18, 118, 618, 718) is opened by adsorbing the case (10, 110, 610, 710) through a suction pad (74) in contact with an outside of the case (10, 110, 610, 710).

12. The manufacturing method as claimed in claim 10 or 11, further comprising, after the discharge of the electrolyte (50) is completed:
a step in which the discharge guide part (80) is separated from the outlet portion (18, 118, 618, 718); and
a step in which the discharge head part (70) seals the outlet portion (18, 118, 618, 718); and
wherein preferably the discharge head part (70) is located on both sides of the outlet portion (18, 118, 618, 718), and the outlet portion (18, 118, 618, 718) is sealed by heating the case (10, 110, 610, 710) through a heating pad (78) in contact with an outside of the case (10, 110, 610, 710).

13. The manufacturing method as claimed in any one of claims 10 to 12, wherein a discharge rod (85) provided in the discharge guide part (80) moves inside the discharge guide pipe (87) and guides the discharge of the electrolyte (50) to the outside of the outlet portion (18, 118, 618, 718); and
wherein the manufacturing method preferably further comprises:
a step in which a weight of the electrolyte (50) discharged to the outside of the outlet portion (18, 118, 618, 718) is measured while the discharge rod (85) firstly descends; and
a step in which the discharge rod (85) secondly descends and the electrolyte (50) is discharged through a connection pipe (88) connected to the discharge guide pipe (87).

14. The manufacturing method as claimed in any one of claims 10 to 13, wherein when the electrolyte (50) is supplied into an inside of the case (10, 110, 610, 710), edges of the case (10, 110, 610, 710), except for the inlet portion (17, 117, 617, 717) and the outlet portion (18, 118, 618, 718), are sealed.

15. The manufacturing method as claimed in any one of claims 10 to 14,
wherein the outlet portion (18, 118, 618, 718) is located diagonally opposite the inlet portion (17, 117, 617, 717); and/or
wherein a gas bag (40, 140, 640, 740) installed in succession to the case (10, 110, 610, 710), and the inlet portion (17, 117, 617, 717) are in communication, the outlet portion (18, 118, 618, 718) is located diagonally opposite the inlet portion (17, 117, 617, 717), and the gas bag (40, 140, 640, 740) is removed from the case (10, 110, 610, 710) after an operation of degassing the case (10, 110, 610, 710) is completed.
